Europäisches Patentamt

**European Patent Office**

**Office européen des brevets**

(11) Publication number: **0 125 835**
**A2**

## (12) EUROPEAN PATENT APPLICATION

(21) Application number: **84302947.1**

(22) Date of filing: **02.05.84**

(51) Int. Cl.³: **B 29 D 3/02**
**B 29 D 23/12, D 04 H 3/07**

(30) Priority: **04.05.83 GB 8312203**

(43) Date of publication of application:
**21.11.84 Bulletin 84/47**

(84) Designated Contracting States:
**CH DE FR IT LI NL SE**

(71) Applicant: **Ford, Roger Anthony**
**2 Eastcott Close**
**Greasby Wirral Merseyside(GB)**

(72) Inventor: **Ford, Roger Anthony**
**2 Eastcott Close**
**Greasby Wirral Merseyside(GB)**

(74) Representative: **Tunnicliffe, Peter Barry**
**Westfields House 5 Vincent Drive Lache Lane**
**Chester, CH4 7RQ(GB)**

(54) Production of composites and non-woven fabrics.

(57) Method and apparatus for making structured products (fabrics or composites) containing an oriented filament or other elongate flexible material by wrapping it into a helix on a carrier, securing the helically wrapped material (e.g. by fusion, adhesion or a binding matrix) and then discharging the product from the carrier. The preferred carrier is an inter-digitating reel mechanism, but other rotating or reciprocating mechanisms can be used to progress the product along the carrier as it is built up. The elongate flexible material comprise any one or more of a variety of threads, filaments, tapes, etc., of practically any materials, and may be fed from stationary or moving dispensers. The product may be flexible or rigid, and is initially tubular (of any desired cross-section) but can be converted to sheet material. Applicable to continuous production and ready adjustment of the degree of orientation, and multi-layer and multi-component products.

*Fig.1.*

EP 0 125 835 A2

PRODUCTION OF COMPOSITES AND NON-WOVEN FABRICS.
INVENTOR: ROGER ANTHONY FORD.

This invention relates to the production of composites and non-woven fabrics of oriented laminated construction from filamentary materials, and to methods and apparatus for carrying out such production.

The demand for non-woven fabrics is currently supplied by materials produced by a range of techniques such as spin-bonding, air-layering, and needle-punching, which result in products with highly random fibre orientation. Frequently these materials are used for industrial purposes in which specific performance characteristics such as strength or porosity are important. Such materials also are often modified by bonding together, by means of adhesives or fusion, or used to form composites for example by embedding them in a matrix material.

The production of non-woven fabrics of precisely oriented laminar construction allows much greater control of both structure and performance in cases for which high "strength to weight" and porosity properties are important. The ability to produce substantially isotropic multi-layer structures of controlled properties is highly desirable but in practice is difficult to achieve by methods other than simple batch-wise techniques using solid mandrels, which are not economically attractive for large-scale or continuous production.

An object of the present invention is to provide methods and apparatus which are suitable for the continuous production of filament-wound structures, either in the form of fabrics or composites, and which avoid the difficulties and the high inventory of labour and energy costs associated with the batch-wise methods using solid mandrels. Especially, an object is to make such wound structures in a way which avoids the axial stresses inherent in methods requiring the wound product to be pulled off the mandrel or carrier on which it is formed.

I now have discovered that the problems can be overcome by using a method and apparatus in which a filamentary material is wound on to a carrier constructed so that the wound structure of filamentary material produced is made to move along the carrier and eventually off the end of it, so that continuous production can be achieved. Especially, I have found that this can be done by using a carrier made up of two or more relatively moveable parts, so that their relative motion lifts the wound structure from one part or sub-assembly of the carrier on to another and is used to achieve linear movement of the wound structure to progress it axially along the carrier and eventually off it.

Thus according to one aspect of the present invention there is provided a method of producing a structure comprising an oriented filamentary material, including the steps of:-

(a) forming a filamentary material into a helix by wrapping it about an elongate carrier and displacing successive portions of the wrapped filamentary material relative to the carrier in the length direction thereof,

(b) securing the wrapped filamentary material in its helical form, and

(c) discharging the secured helix from the carrier.

According to a further aspect of the present invention, there is provided apparatus for forming a filamentary material into a helix for the production of an oriented structure, comprising:-

(a) carrier means comprising two or more elongate elements spaced apart,

(b) dispensing and guiding means for supplying filamentary material,

(c) means for producing relative movement of the spaced elements of the carrier means and of the dispensing and guiding means so as to wrap filamentary material around the carrier and to displace wrapped portions of the filamentary material lengthwise of the carrier elements.

The term "filamentary material" is used herein in the sense of including any elongate flexible material and is not restricted to mean solely those materials which are strictly filaments. The term therefore includes a wide variety of unitary, composite or fabricated thread-like flexible bodies. Examples of elongate flexible materials which may thus be used for the purposes of the invention include natural and man-made materials in the form of fibres, staple fibre, yarns, threads, slivers, continuous filaments and the like. There may also be used wires, rods, strips, tapes, braids, and the like. Such materials may be organic or inorganic in nature, for example organic and/or inorganic polymer materials, metallic materials (for example metals and alloys), glass or other vitreous materials, ceramics, carbon, and mixtures and combinations thereof. Accordingly, these elongate flexible materials may be made by any known technique, for example by spinning, extruding, slitting of sheet material, weaving, knitting, braiding, needle-punching, the bonding together of component materials, or a combination of such techniques.

If desired, the term "filamentary material" can be replaced by the term "elongate flexible material."

Examples of materials from which the filamentary materials may be composed include polyesters (for example polyethylene terephthalate), polyamides (for example nylon), spun glass, vinyl chloride and vinylidene chloride polymers and co-polymers, aramids, carbon fibre, and combinations thereof.

The filamentary materials used may have actual or potential adhesive or cohesive properties, and may be solid or hollow in cross-section or of bi-component or multicomponent nature, for example so-called "heterofil" forms in which a core of one material is surrounded by an envelope of another material (usually as a combination of two different organic polymeric materials).

The carrier may comprise a plurality of elongate elements, very conveniently matched into one or more pairs, and one element of a pair may serve also as an element of another pair.

In one embodiment the pair of elongate elements may be a pair of axially rotating rollers spaced apart by a distance greater than the sum of their radii and having rotational axes which incline towards each other. The inclined axes cause the rotation of the rollers to wrap the filamentary material, from one roller to the other and back again, and also to move the windings progressively along the rollers until they come off the ends of the rollers.

Advantageously and preferably the carrier may comprise an inter-digitating reel. The inter-digitating reel was developed and used in the manufacture of synthetic fibres, particularly artificial silk or rayon, as a means of treating and/or temporarily storing great lengths of continuous filaments. Such reels are described more fully in for example U.K Specifications Nos. 413413 and 413414.

Briefly, an interdigitating reel is a device in which two separate carrier components, approximately cylindrical in shape, are each constructed with a multiplicity of projecting bars mounted on a rotatable face plate, and the two carrier components fit together so that the projecting bars of one intermesh with the projecting bars of the other. The bars of the two carrier components thus alternate with each other and thereby define a drum-like surface. The two carrier components are usually adapted to be rotated, with provision for their axes of rotation to be varied eccentrically in relation to each other, and even at an angle in relation to each other (i.e. askew), and also can be with provision for the two carrier components to be moved in an axial direction relative to each other. The bars of the two carrier components provide the plurality of pairs of both first and second edges referred to above. The relative motions between the two components provide for the winding of threads and the like around the reel, and for the progressive movement of the wound material across the surface of the reel. Such modes of operation are also more fully described in U.K. Specifications Nos. 413413 and 413414.

In the use described in U.K Specifications 413413 and 413414, the reel was rotated bodily about its axis to take up thread from a fixed supply position. In the procedure of the present invention this same motion (the so-called "rotating" mode) may be used, but if desired the reel may be kept in a so-called "static" mode (i.e. the reel components are not rotated bodily) while the supply of filamentary material is fed from a source moving around the reel in planetary fashion, and the relative eccentric and lateral movements of the reel components are used to progress wound material across the surface of the reel.

The wrapping of the filamentary material about the carrier may be achieved by rotating the carrier about its longitudinal axis, by guiding the filamentary material about the carrier when stationary (i.e. not rotating), or by a combination of rotating the carrier and guiding the filamentary material around it. Whether or not the carrier is rotated, the filamentary material may be traversed to and fro lengthwise of the carrier.

The apparatus may be such that the guide and/or dispensing means for filamentary material is moveable around the carrier in a cyclic path which lies transversely to, and preferably in a plane substantially perpendicular to, the length direction of the carrier. If desired, however, the carrier may be rotated and the supply and/or guide means for the filamentary material can be kept stationary. When the carrier is not rotated, the guide means for the filamentary material can be arranged to pass cyclically about the carrier, together with the source supplying the filamentary material -- an arrangement which can facilitate construction and operation. When the carrier itself rotates bodily about its axis, the guide means may be stationary but may if required traverse reciprocatingly lengthwise of the carrier.

The displacement of the successive portions of the wound elongate flexible material relative to the carrier is achieved by the mode of construction and movement of the carrier components.

Means may also be provided to lay one or more filamentary materials over or under the helical filamentary materials in the lengthwise direction of the carrier. Where the carrier rotates about its axis, the means for laying such lengthwise filamentary materials may also rotate so that the longitudinally laid filamentary materials can if desired remain at least substantially parallel to the carrier axis. Such materials laid down longitudinally may be the same as the filamentary material used for the helical winding, or may be different.

Further guide means for the wrapping of a second filamentary material about the carrier may be spaced from the first-mentioned guide means along the length of the carrier and they may be arranged to move relatively about the carrier in the opposite direction of rotation, whereby a helix of filamentary material of opposite hand may be formed on top of the helix supplied by the first-mentioned guide means.

The securing of the wrapped filamentary material in its helical form may be achieved by any means which imparts sufficient cohesion to the wound material to enable it to retain its integrity when it is taken from the carrier and handled or used. This may be achieved by adhesives, by using a filamentary material which is inherently adhesive, or by modifying the filamentary material to bring about the desired adhesion.

This may be done in a variety of ways, depending upon the materials used and the properties desired. Most conveniently, the strands of filamentary material are made to adhere to each other where they make contact with each other. These points of contact may be where the strands cross over each other or lie alongside each other.

Uncoated filamentary material may be simply stuck together, for example by the application of adhesive, a solvent, a swelling agent, heat, or a combination of these. A swelling agent may be liquid or gaseous in form, and may require a combination of agent and heat. Such swelling agents and conditions are well known in the art for available materials.

If the filamentary material is fibrous, the cohesion may be achieved by mechanical means, for example by needle-punching or felting.

To secure adhesion, the filamentary material may be wholly or partly coated with a fluid adhesive composition, either before or after the formation into the helical array. Normally, the coating is sufficiently thick, the composition sufficiently viscous, and the pitch of the helix sufficiently fine for the coating of adjacent turns of the helix to merge to form a continuous layer in which the filamentary material is effectively embedded so that when the composition hardens, such as by the application of heat, a filament-reinforced tube results. The tube may be split to form a flat, filament-reinforced fabric.

Particularly if the filamentary material is pre-coated, it may be necessary (for example for storage in a dispenser) to get it into a condition in which it does not stick together prematurely, i.e. to render it temporarily dry and non-adhesive. It may then be necessary to provide a medium or conditions (for example a solvent, a swelling agent, heat or a combination of these) to render the surface soft enough to merge or adhere. If a porous fabric is required, the merging or adhesion of the coatings should usually be restricted to where strands of the filamentary material cross over one another, so as to leave spaces between the strands.

The coating or adhesive compositions may be any of those known in the art. They may include thermosetting or thermoplastic polymers and resins, metals, ceramic materials, and precursors thereof, paper pulp, and appropriate known solvents, additives and components of adhesives.

A matrix may be provided about the helical filament, to a greater extent than is needed just to secure the wound structure. This matrix then can surround and embed the wound filamentary material substantially completely, and the fabric becomes a composite, i.e. a material comprising one material (usually a material which hardens from a fluid to a solid state) with another material (in this case, the wound filamantary material) enclosed within it as modifying reinforcement. For this purpose, the matrix may be any material or mixture of materials which is fluid enough to be applied and which is capable of setting (or hardening) when in place. Such materials include those which are usable as adhesives, the difference then being in the amount material added.

The matrix may be applied by completely or partially coating the first-mentioned filament and any one or more of any further or additional filaments. Alternatively or additionally the filament or filaments may be coated after being laid upon the carrier. The matrix may be such that the coating of one filament or portion of filament may combine with the coating of another such. The coatings may combine where filament portions are substantially parallel or when they cross. The matrix may be of thermoplastic or thermosetting resin or a solution or a suitable liquid form of metallic or ceramic materials or some precursor of such materials.

The method and apparatus of the invention may be used to produce multi-layer and multi-component materials without difficulty. Thus, different filamentary materials may be laid down on the carrier simultaneously or successively, forming layers of wound material which are inter-wound or superimposed to achieve desired effects. Thus, further or additional filamentary material may be of the same or different nature as that first used, and different filamentary materials may be chosen so that their properties supplement each other. Any said further filamentary material may be formed into a helix of the same hand as that of the first filamentary material or of opposite hand.

The product initially produced is usually tubular. The cross-section of the product may be a regular tube, for example of sustantially circular cross-section, or it may be of irregular cross-section, as for example when the carrier is constructed so as to impart the desired shape directly or when the tube produced is appropriately deformed after it comes off the carrier. This deformation or shaping can be to any desired extent, consistent with the properties of the materials used, provided it is carried out before the tubular product has set or hardened to an extent which no longer permits deformation without damage. Thus for example the tubular product may even be flattened to form sheet material, but it is perhaps more convenient to cut it to enable it to be opened out into sheet form. The cutting may be by simple slitting along the length of the tube, but it may also be by a helical cut to produce a length of flat material. Helical cutting has the advantage that it gives the opportunity to arrange the cut at any selected pitch and angle, so that the angle of the contained filamentary material in relation to the length of the cut material can be selected.

The product may also be modified by procedures other than deformation, for example by heat, pressure, chemical agents, or combinations of these, as appropriate to to change their properties temporarily or permanently. This applies not only to the original tubular products but also to materials (e.g. cut sheet material) derived from it.

The product may be rigid or flexible, according to the materials used. If desired the choice of materials may be made so as to produce a product which comes off the carrier in a flexible form but can be hardened ("cured") by subsequent treatment, for example by heating, or by hardening or polymerising processes known in the art. If desired, the hardening or other treatment may be carried out while the product is on the carrier, provided care is taken to ensure that this does not prevent the product coming off the carrier. For example, care may have to be taken to ensure that the wound material or any coating thereon does not adhere to the carrier, either itself or as a result of conditions to which it is subjected on the carrier. This can be achieved for example by coating the carrier with an appropriate release agent or a supply of material which intervenes between carrier and filamentary material to prevent such unwanted adhesion.

The advantages of the invention include:-
(a) the ability to produce wound filamentary structures on a continuous basis;
(b) the ability to produce wound filamentary structures in tubular form and to produce from these other forms -- for example sheet materials -- by subsequent operations;
(c) the ability to produce these products in rigid or flexible forms, and as forms of non-woven fabrics or textile materials or composite materials;
(d) the ability to facilitate the production of materials which are of non-circular cross-section (for example square, polygonal, or even more complex cross-section), while avoiding the axial stresses which are common (or inherent) in the known continuous winding techniques depending upon the composite structure being pulled off the end of a rigid mandrel.

The invention is illustrated but not limited by the following description with reference to the accompanying drawings, which are schematic and not to scale and of which:-

Figure 1 is a perspective view of an apparatus for forming helices;

Figures 2 and 3 are perspective views of a first and second carrier component respectively, for the cylinder of Figure 1;

Figures 4 and 5 are transverse and longitudinal sectional views respectively of the complete cylinder of Figure 1, in which the degree of inclination of the axes is shown to an exaggerated extent for purposes of clarity;

Figure 6 is a perspective view of a second embodiment of the invention;

Figure 7 is a diagrammatic representation of a complex helix formation obtainable on apparatus of the invention.

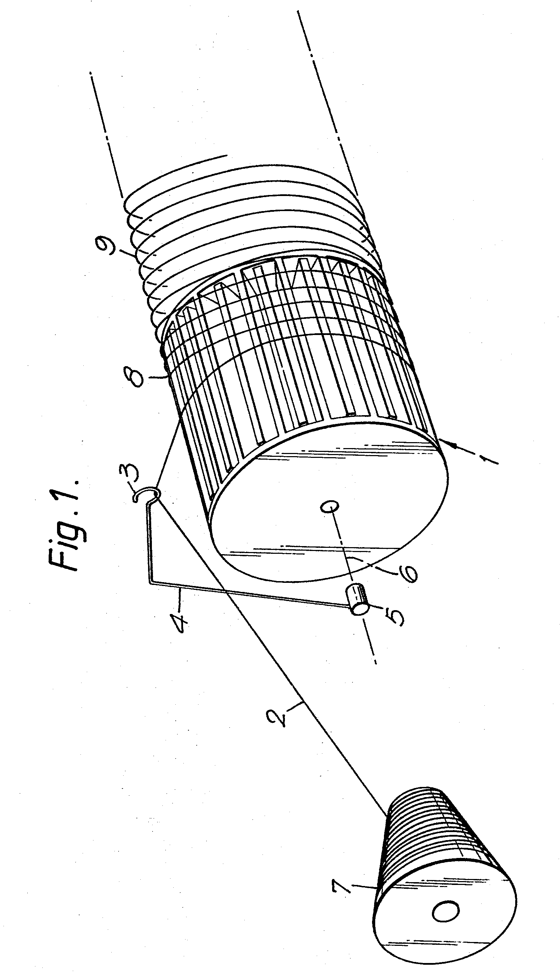

In Figure 1, the apparatus of the invention comprises an interdigitating reel having a slatted cylinder (1) about which a filament (2) is wrapped by means of a guide eye (3) at one end of an arm (4) which is mounted at the other end for rotation about a pivot (5) coaxial with the axis (6) of the cylinder (1). It will be noted that the eye (3) moves about the cylinder in a plane perpendicular to the axis (6) of the cylinder (1), and that at least in this embodiment the cylinder (1) itself does not rotate bodily. The filament (2) is supplied from a source carried around the cylinder (1) in association with the arm (4) by any suitable known means (not shown).

If the cylinder (1) were a solid body, each successive winding of filament would be laid on top of previous windings. However, the cylinder (1) comprises two separate but inter-relating elements as will be described below, and which cause each successive length portion of filament wound on the cylinder surface in the plane of rotation of eye (3) to be displaced lengthwise of the cylinder so that the enwrapped filament adopts a helical form (8) on the surface of the cylinder (1).

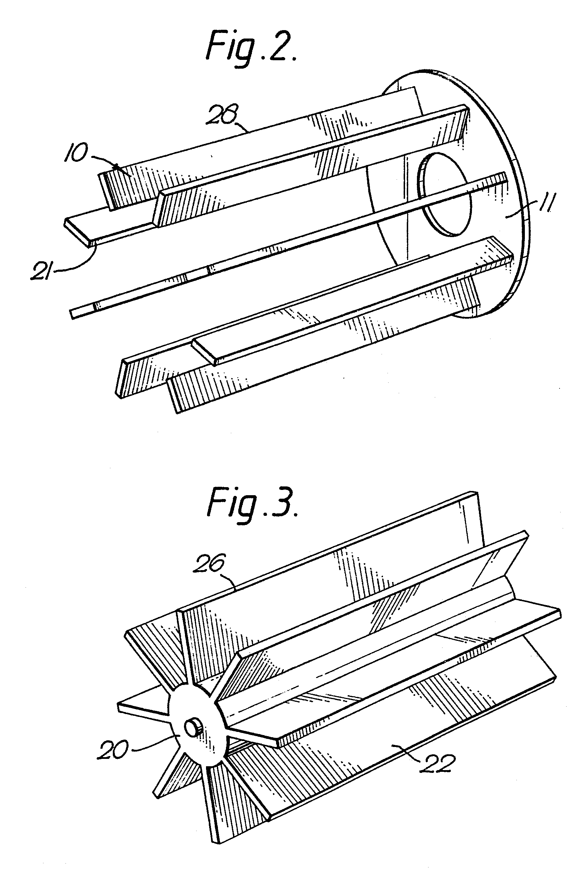

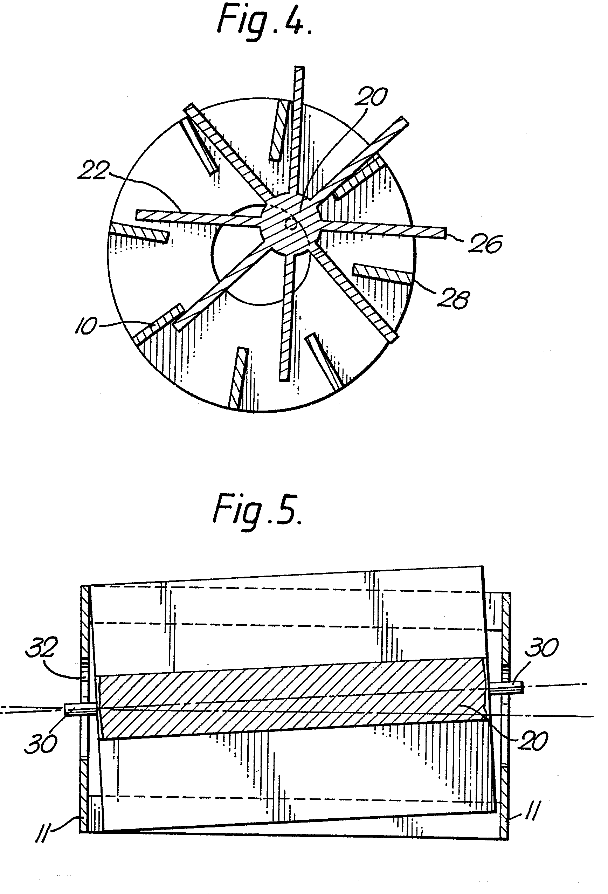

The first Element A of the cylinder (1) is shown in Figure 2. It comprises a plurality of blades (10) arranged parallel to the cylinder axis and in equidistantly spaced radial planes. These are mounted at their ends in circular plates (11) (one only of which is shown). For the sake of simplicity, only eight blades are shown, but in practice more (or, less likely, fewer) may be arranged as required. The other Element B of the cylinder (1) is shown in Figure 3 and is a member of constant star-shaped section and comprises a central core (20) and as many radially outwardly projecting ribs (22) as there are blades (21) in the first mentioned Element A. The diameter of the central core (20) is somewhat less than the distance between the inner edge (21) of diametrically opposed (or substantially diametrically opposed) blades of Element A, and the spacing between adjacent blades and ribs is greater than their thickness so that Element B can be accommodated within Element A as shown in Figure 4.

It may be that only one of the Elements A and B can be pre-fabricated, and that the other must be assembled from individual parts within or about it.

The overall diameter of each of the Elements A and B is at least approximately the same, so that, when the Element B is accommodated within the Element A, and the axes of the two Elements are coincident, the outer edges (26) of the ribs and the outer edges (28) of the blades constitute a slatted cylindrical surface.

The core (20), however, is provided at each end with an axial stud (30) which projects beyond the corresponding end plate of Element A which for this purpose is provided with a central circular orifice (32), and the stud at one end of the cylinder (1) is displaced transversely from the axis of Element A so that at that end the edges of some of the ribs (depending upon the direction of displacement) project beyond the adjacent blades as shown in Figure 4, whilst at the diametrically opposite side of the cylinder (1) the edges of some of the blades project beyond adjacent ribs. The stud is then caused by conventional means, not shown, to move in a planetary motion, without change in orientation, about the axis (12), so that the projection of the ribs progresses around the cylinder and the relative projection of the blades follows 180 degrees out of phase.

The radius of the planetary motion can be varied as required within a maximum value determined by the diameter of the orifice (32), and the space tolerance provided within the blades (16) for the core (20). The rate and direction of movement can also be varied at will. The stud (30) at the other end of the core is, in one arrangement, kept stationary so that the above-mentioned projections of blades and ribs are inclined projections varying from a maximum, at the end where the stud (32) is displaced, to zero at the other end of the cylinder. However, other arrangements are within the scope of the invention, thus the stud (32) at the other end may also be displaced in planetary motion at the same rate as the motion of the first-mentioned stud but with different radii of eccentric motion.

The wound filamentary material is shown as coming off the end of the cylinder (1) as a secured helix (9) at the free end of the carrier in Figure 1.

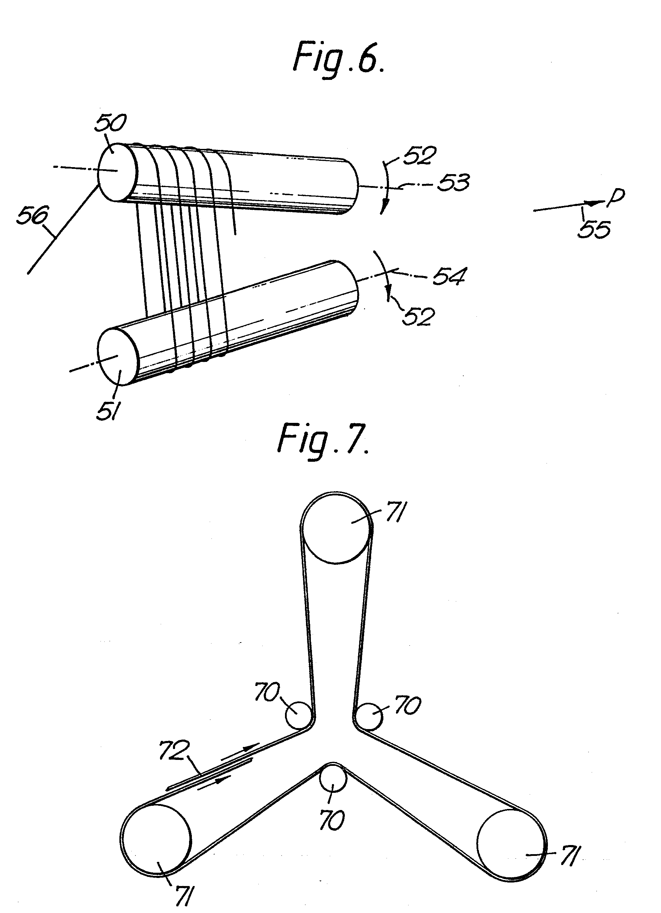

In the embodiment shown in Figure 7, a pair of rollers (50), (51) is arranged in conventional means for rotation in the direction of arrows (52) about their axes (53), (54) which are oriented so as to converge at a distant point P indicated by arrow (55). Means essentially like those described above for Figure 1 are used to wrap a filament (56) about the rollers in a plane perpendicular to their axes, but a combination of the rotation and their axial skew causes each wrap to be displaced in the direction of convergence point P.

Whilst the filament has been generally described as being carried around a stationary carrier, and this may be the only practical arrangement when the carrier is large, it is nevertheless within the scope of the invention to carry the carrier around a stationary filament supply or indeed to rotate the carrier bodily alongside a stationary filament supply, with similar result. Even though the wrapping of the filament may be (and likely is) strictly cyclic, that is to say whatever its path it returns eventually to the same point, nevertheless successive length portions of the enwrapped filament undergo lateral movement so that a helix is formed. The hand of the helix is determined by the direction of enwrapment and the pitch is determined by the parameters of the relative movements of the Elements A and B of the cylinder (1) in the first embodiment and the skew of the rollers in the embodiment shown in Figure 6. Also influential on pitch is any change in width of the carrier along its length.

Where the carrier is rotated, and particularly where this is an interdigitating reel, the filament guide means may be traversed to and fro lengthwise of the carrier so that there is superimposed on the pitch determined by the above-mentioned parameters a further and coarser spirality determined by the relative speeds of traverse and of rotation. This may result in a cross-wound formation of the filament on the carrier.

A more complex filamentary array can be effected, especially but not exclusively where the carrier is a stationary interdigitating reel, by introducing additional filaments lengthwise of the carrier from supply sources at one end thereof. These may be laid over or under selected ones of the helical filaments, and are preferably (but not exclusively) parallel to the axis of the carrier.

In one or other of the ways described, a filamentary array including at least one helix is built up on the carrier and, by the propensity of the carrier to displace each coil laterally, the array gradually moves to, and is eventually discharged from, one end of the carrier. The discharge may be assisted by narrowing the carrier towards that end. Meanwhile the winding of filaments about the other end of the carrier continues as long as necessary for achieving the filamentary product required.

The basic carrier differs from a conventional mandrel in being constructed from two segmented sub-assemblies and an important feature of the device is that advance of the wound filamentary material is obtained by the relative motion between the two sub-assemblies. It is possible therefore to have either a static or a rotating mandrel condition.

Filament winding applications which can be met include:

(a)    Freedom to select all laminar orientations between 0 and 90 degrees.

(b)    Ability to produce complete laminar layers without filament crossovers.

(c)   Freedom to select individual filamentary material compositions for each laminar layer. ("Hybridising.")

(d)   Ability to introduce to controlled inter-weaving of laminar layers.

Specific features of the carrier as used herein include:-

(a)   Axial transport in both directions.

(b)   Fixed or variable advance rates.

(c)   Programmable patterns of axial movement.

(d)   Easy adjustment of carrier dimensions.

(e)   No limitation to cylindrical cross-sections.

It is also important that the method minimises damage to the filamentary material and the applicatiion of high tensile stresses prior to the completion of curing. The composite support meets all these requirements whilst also offering the progressive advance facility necessary for continuous processes without the disadvantages associated with solid mandrels.

Although the most simple form of carrier for use in the invention is of cylindrical construction, the principles of operation do not restrict it to tubular products, and can cover non-circular cross-sections and radial and circumferential reinforcement.

While the inter-digitating reel leads to the formation of substantially cylindrical structures, other embodiments mey be used to produce other shaped structures. For example, by using multiple elements in the carrier system (for example multiple rollers and/or inter-digitating reels) to define the desired configuration, products of practically any cross-section can be made. The structures may even include reverse curvature, when inter-digitating reels are used.   An illustration of this is shown in Figure 7, wherein the use of six inter-digitating reels in the arrangement shown can produce a product having a three-lobed cross-section.   The filament (72) repeatedly describes a winding, non-crossing path about the three central interdigitating reels (70) and three peripheral interdigitating reels (71).

Variations of carrier arrangements which can be used include:
(a) two rollers with skew,
(b) multiple rollers with skew,
(c) interdigitating reel with skew, rotating mode.
(d) interdigitating reel with skew, static mode.
(e) interdigitating reel with axial effect, rotating mode,
(f) interdigitating reel with axial effect, static mode,
(g) multiple interdigitating reels with axial effect.

The feed arrangements of filamentary material with rotating carriers may include:
(a) Fixed feed, giving cross-wound at $\pm$ x degrees.
(b) Fixed feed, giving hoop-wound at approximately 90 degrees.
(c) Planetary feed, longitudinal filament (0 degrees).
(d) Traversing feed, giving overlapping cross-wound at $\pm$ x degrees.
and with static carriers may include:-
(a) Planetary feed, giving cross-wound at at $\pm$ x degrees.
(b) Planetary feed, giving hoop-wound at approximately 90 degrees.
(c) Fixed feed, longitudinal filament (0 degrees).
(d) Traversing/planetary feed, giving overlapping cross-wound at $\pm$ x degrees.

----- 0 -----

C L A I M S:-

1. Method of producing a structure comprising an oriente⁻ filamentary material as hereinbefore defined, including the steps of:-

(a) forming a filamentary material into a helix by wrapping it about an elongate carrier and displacing successive portions of the wrapped filamentary material relative to the carrier in the length direction thereof,

(b) securing the wrapped filamentary material in its helical form, and

(c) discharging the secured helix from the carrier.

2. Method as claimed in Claim 1 wherein the carrier is made as a combination of sub-units and the progressing of the wound structure is achieved by motion in which the wound structure is lifted off one sub-assembly of the carrier on to another in a manner which achieves axial movement of the wound filamentary material relative to the carrier.

3. Method as claimed in Claim 2 wherein the carrier comprises an inter-digitating reel system.

4. Method as claimed in Claim 1 wherein multiple layers of filamentary material are wound.

5. Method as claimed in Claim 1 wherein multiple carriers are used.

6. Method as claimed in Claim 1 wherein the wound filamentary material is bonded together, preferably by a coating of adhesive material applied as a pre-coating upon the said filamentary material applied prior to it being wound upon the carrier.

7. Apparatus for producing a structure comprising an oriented filamentary material as hereinbefore defined, comprising means for helically winding the filamentary material on to a carrier and means for progressing the said wound structure along the carrier and eventually off it as further filamentary material is wound on to it.

8. Apparatus as claimed in Claim 7 for forming a filamentary material as hereinbefore defined into a helix for the production of an oriented structure, comprising:-

(a) carrier means comprising two or more elongate elements spaced apart,

(b) dispensing and guiding means for supplying filamentary material,

(c) means for producing relative movement of the spaced elements of the carrier means and of the dispensing and guiding means so as to wrap filamentary material around the carrier and to displace wrapped portions of the filamentary material lengthwise of the carrier elements.

9. Apparatus as claimed in Claim 7 wherein the carrier comprises an interdigitating reel mechanism, preferably operable in a mode in which it does not rotate appreciably but acts principally to displace the wrapped portions of filamentary material across the reel surface, and guide means for the supplied filamentary material rotatable around the reel to produce the helical winding of the filamentary material, and optionally the dispensing means for supplying the filamentary material is also rotatable about the reel.

10. Apparatus as claimed in Claim 7 wherein multiple carriers are used.

11. Apparatus as claimed in Claim 7 adapted to lay down multiple layers of the wound filamentary material.

12. Products comprising a coherent layered construction of filamentary material as hereinbefore defined, having a helically wound structure and characterised by having tubular form or being derived from a tubular form, for example by cutting to form sheet.

----- 0 -----

Fig.1.

**Fig.2.**

**Fig.3.**

Fig.4.

Fig.5.

Fig.6.

Fig.7.